# DEMANDE DE BREVET EUROPEEN

(11) **EP 0 621 452 A1**
(43) Date de publication de la demande: **26.10.1994**
(21) Numéro de dépôt: 94400852.3
(22) Date de dépôt: 19.04.1994
(51) Int. Cl.: F24F 11/047, G05D 7/01

(54) **Dispositif de régulation automatique du débit d'air dans une installation de ventilation, climatisation ou analoque**

(30) Priorité: 20.04.1993 FR 9304645
(71) Demandeur: ABB FLAKT, F-78220 Vitroflay (FR)
(72) Inventeur: Fleury, Bernard, F-79400 Saint Maixent l'Ecole (FR); Michaud, Daniel, F-79260 La Creche (FR); Mercier, Michel, F-79400 Saint Maixent l'Ecole (FR)
(74) Mandataire: Durand, Yves Armand Louis

(57) **Abrégé**

La présente invention concerne un dispositif de régulation automatique du débit d'air dans une installation de ventilation, climatisation ou analogue.

Ce dispositif comprend essentiellement un corps (1) comprenant une entrée (2) en forme de col de tuyère (4) auquel fait suite au moins un volet (5) articulé sur le corps (1) du côté de sa sortie (3), sollicité en permanence par un ressort (11) en position d'ouverture maximum du passage d'air (P) dans le corps (1) et susceptible de se déplacer sous l'effet de la différence entre la pression amont s'exerçant sur la face externe (5a) du volet (5) et transmise par des ouvertures (6) ménagées dans l'entrée (2) du corps (1) en forme de col de tuyère (4) et la pression s'exerçant sur la face interne (5b) du volet (5) après passage de l'air au travers de l'entrée (2).

Ce dispositif peut être placé dans par exemple un conduit, une bouche ou un caisson pour y réguler automatiquement le débit d'air qui y passe.

## Description

La présente invention a pour objet un dispositif de régulation automatique du débit d'air dans une installation de ventilation, climatisation ou analogue.

On a déjà proposé des dispositifs de régulation automatique du débit d'air comprenant essentiellement un corps insérable dans par exemple un conduit ou une bouche et muni d'un organe susceptible, sans source d'énergie auxiliaire, de réduire automatiquement le passage de l'air dans ledit conduit ou ladite bouche afin de permettre un débit d'air sensiblement constant quelles que soient les différences de pression en amont et en aval du corps.

Un tel dispositif a par exemple été décrit dans le document FR-A-2086610 où l'organe de réduction automatique du passage de l'air est constitué par une vessie susceptible de se gonfler selon les différences de pression de part et d'autre du corps dont est solidaire la vessie.

D'une manière générale les dispositifs actuellement connus présentent un certain nombres d'inconvénients parmi lesquels il faut citer une fiabilité de fonctionnement non satisfaisante à la longue, des contraintes de fabrication compte tenu des matériaux utilisés, et la génération de bruits nuisant au confort lors du fonctionnement de l'installation de ventilation ou de climatisation.

Aussi, la présente invention a pour but de remédier notamment aux inconvénients ci-dessus en proposant un dispositif de régulation automatique dont la fiabilité de fonctionnement dans le temps demeure excellente du fait que les éléments qui le composent ne présentent aucune fragilité mécanique particulière, et dont les qualités, sur le plan acoustique, sont aussi excellentes, puisque quelles que soient les conditions de fonctionnement de l'installation de ventilation ou de climatisation équipée de ce dispositif, son fonctionnement demeurera parfaitement silencieux. Cela est dû essentiellement au fait que ce dispositif a une structure ne comportant aucun élément constituant un obstacle franc au passage de l'air qui le traverse.

A cet effet, l'invention a pour objet un dispositif de régulation automatique du débit d'air dans une installation de ventilation ou analogue et du type comprenant un corps insérable dans une partie de l'installation telle que par exemple conduit, bouche, caisson ou analogue et muni d'au moins un organe susceptible de réduire automatiquement le passage de l'air dans ladite partie pour y assurer un débit d'air sensiblement constant quelles que soient les différences de pression en amont et en aval du corps, caractérisé en ce que ledit organe est constitué par un élément en forme de col de tuyère prévu à l'entrée du corps et auquel fait suite au moins un volet articulé sur le corps du côté de sa sortie, sollicité en permanence en position d'ouverture maximum du passage d'air dans ledit corps, et susceptible de se déplacer sous l'effet de la différence entre la pression amont s'exerçant sur la face externe du volet et transmise par au moins une ouverture ménagée dans l'élément en forme de col de tuyère, et la pression s'exerçant sur la face interne du volet après passage de l'air au travers dudit élément en forme de col de tuyère.

Selon un mode de réalisation particulier, sur le corps, sont articulés deux volets en vis-à-vis et sollicités en permanence par des moyens de rappel, tels que par exemple un ressort, vers une position d'ouverture maximum du passage d'air dans le corps.

On précisera encore ici que les deux volets précités peuvent être fonctionnellement reliés par des moyens tels que par exemple des biellettes coopérantes ou analogues.

Suivant encore une autre caractéristique de l'invention, en position de repos et en position active, le ou les volets précités forment dans le corps un passage divergeant vers l'aval et se raccordant par les bords libres du ou des volets à l'élément précité en forme de col de tuyère.

On précisera encore ici que le corps précité comporte une paroi externe formant enveloppe qui définit avec l'élément en forme de col de tuyère et la face externe des volets plusieurs chambres interconnectées ou non et communiquant avec l'air amont par l'ouverture précitée.

Selon encore une autre caractéristique du dispositif de l'invention, la paroi externe formant enveloppe du corps est soit intégrale audit corps soit définie par la paroi d'un conduit, d'une bouche ou analogue dans lequel est inséré le corps.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue schématique et en coupe longitudinale d'un dispositif de régulation conforme aux principes de l'invention.

La figure 2 est une section suivant la ligne II-II de la figure 1.

La figure 3 est encore une vue en coupe longitudinale illustrant schématiquement la liaison fonctionnelle qui peut être prévue entre les deux volets du corps.

La figure 4 est une vue similaire à la figure 3, mais montrant un autre mode de réalisation de la liaison fonctionnelle entre les deux volets.

La figure 5 est une vue de la face avant ou amont du corps comportant ici deux volets de forme arquée optimisant la section de passage.

La figure 6 est une vue similaire à la figure 1 mais montrant une autre forme de réalisation du corps complété par une portion de conduite entourant ce corps.

La figure 7 est une section suivant la ligne VII-VII de la figure 6.

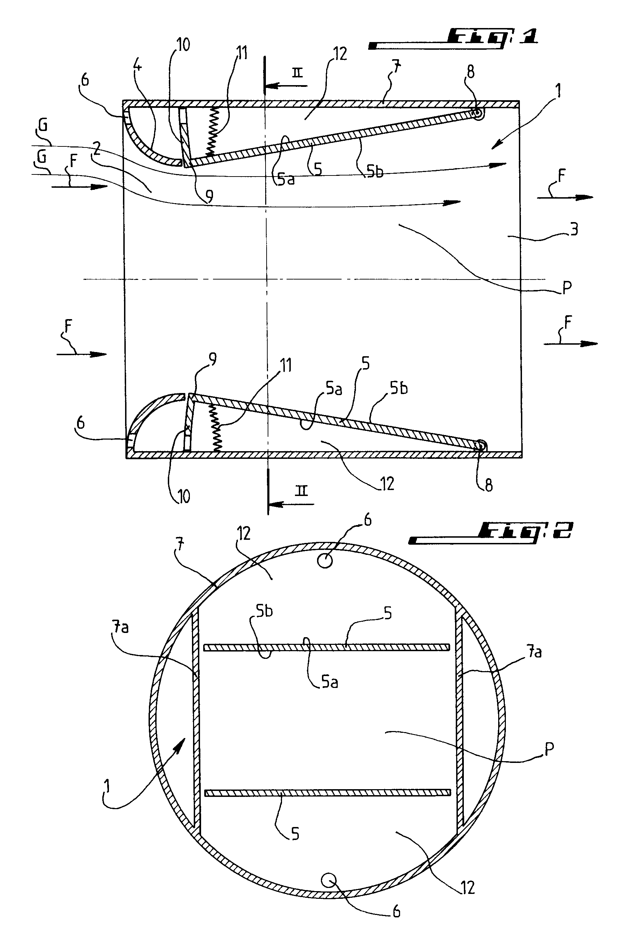

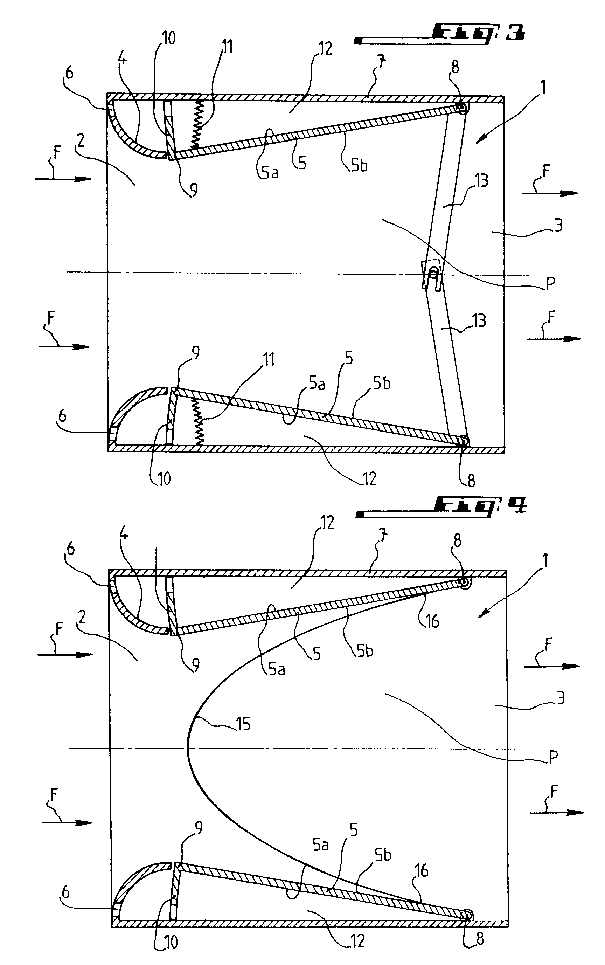

Suivant l'exemple de réalisation représenté sur les figures 1 et 2, un dispositif de régulation automatique du débit d'air selon cette invention comprend essentiellement un corps 1 muni d'une entrée 2 et d'une sortie 3 permettant le passage de l'air suivant les flèches F et dont le débit sera automatiquement régulé.

A cet effet, l'entrée 2 du corps 1 est munie d'un élément 4 en forme de col de tuyère et auquel fait immédiatement suite un ou plusieurs volets 5, par exemple deux volets suivant l'exemple de réalisation représenté sur les figures 1 et 2.

Dans l'entrée 2 en forme de col de tuyère 4 sont ménagées des ouvertures 6 permettant une prise de pression en amont du corps 1 suivant les flèches F.

Comme il apparaît clairement sur la figure 2, le corps 1 comporte une paroi ou enveloppe externe 7 qui est intégrale audit corps et dont on voit en 7a sur la figure 2 les parois latérales. L'entrée en forme de col de tuyère 4 est intégrale à l'enveloppe 7, mais on pourrait parfaitement, sans sortir du cadre de l'invention, prévoir une entrée 4 qui serait rapportée sur et en bout de l'enveloppe 7.

Les volets 5, comme on l'a montré schématiquement sur la figure 1 sont articulés par une extrémité en 8 sur le corps 1, plus précisément sur l'enveloppe 7, du côté de la sortie 3 dudit corps 1. L'autre extrémité ou bord libre 9 des deux volets 5 fait suite à l'élément en forme de col de tuyère 4. Les bords libres 9 des volets 5 en vis-à-vis comportent chacun un retour 10 permettant à chaque volet de venir en butée sur l'enveloppe 7, et cela, comme on le voit sur la figure 1, de manière que lesdits bords libres 9 se raccordent à l'élément en forme de col de tuyère 4.

Les deux volets 5 sont chacun constamment sollicités par un ressort 11 en position d'ouverture maximum du passage d'air P dans le corps 1 suivant les flèches F. Les ressorts 11 sont montés par leurs extrémités entre la face externe 5a des volets 5 et l'enveloppe 17. Ainsi, en position de repos, le corps 1, à savoir l'enveloppe 7 et les parois latérales 7a définissent avec l'élément en forme de col de tuyère 4 et les volets 5 deux chambres 12 extérieures au passage P de l'air suivant les flèches F et communiquant avec l'air amont par les ouvertures ou prises d'air 6.

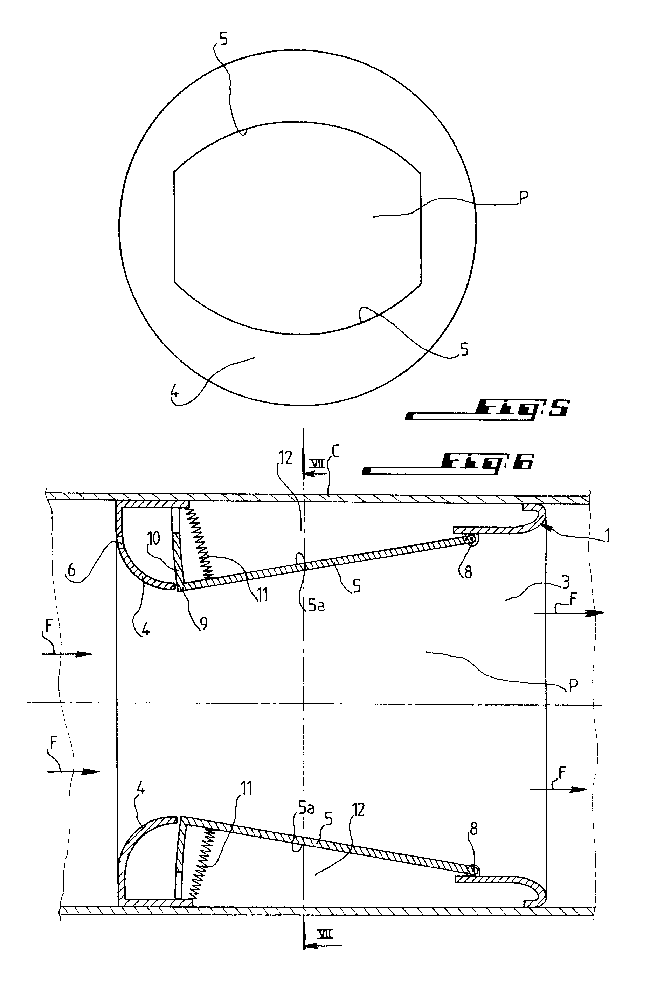

Comme il apparaît clairement sur la figure 3, les deux volets 5 peuvent être fonctionnellement reliés par deux biellettes ou analogues 13, chacune étant solidaire par une extrémité d'un volet 5, et les deux biellettes étant articulées à leur autre extrémité par un axe 14.

Ainsi, l'action des ressorts 11 ou de la pression dans les deux chambres 12, comme on le décrira en détail plus loin, provoqueront nécessairement l'actionnement simultané des deux volets 5.

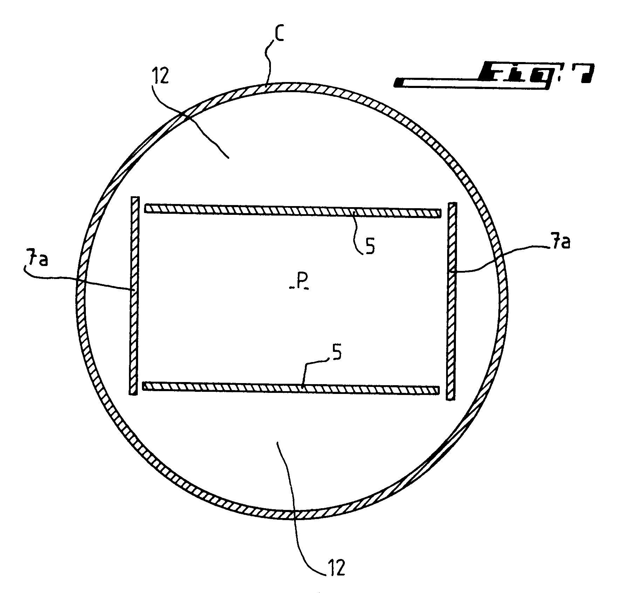

Dans la réalisation illustrée par la figure 4, on utilise, à la place des biellettes coopérantes 13 une lame-ressort de rappel 15 dont les extrémités libres 16 sont respectivement fixées sur les volets 5. Une telle lame-ressort de rappel reliant fonctionnellement les deux volets 5 permet avantageusement d'omettre les ressorts 11. En effet, elle permet aussi de solliciter en permanence les volets 5 en position d'ouverture maximum du passage de l'air P dans le corps suivant les flèches F.

Les volets 5 du dispositif représenté sur les figures 1 à 4 sont sensiblement plans, mais on peut parfaitement, comme représenté sur la figure 5, utiliser deux volets présentant une forme arquée, ce qui optimise le profil transversal du passage P de façon à maximaliser le débit dans ce passage.

Dans le mode de réalisation représenté sur les figures 6 et 7, l'enveloppe du corps 1 de l'appareil n'est pas une paroi intégrale à ce corps comme précédemment, mais est constituée par la paroi d'un conduit C ou analogue dans lequel est inséré le corps 1 et qui vient en quelque sorte fermer, du côté extérieur, les chambres 12. Le ressort 11 est bien entendu ici monté entre les volets 5 et le corps proprement dit 1. Comme cela est bien visible sur la figure 7, il n'y a pas ici deux chambres 12 indépendantes, mais plutôt une chambre 12 unique, puisque les deux chambres de part et d'autre de chaque volet 5 communiquent, étant donné que les parois latérales 7a du corps 1 ne se raccordent pas avec la paroi du conduit C.

Dès lors, du fait que l'on se trouve en présence d'une chambre unique 12, on peut prévoir une seule ouverture telle que 6 dans l'entrée en forme de col de tuyère 4, comme on le voit bien sur la figure 6.

Dans tous les modes de réalisation qui viennent d'être décrits, on voit que le dispositif selon cette invention, lorsqu'il se trouve dans la position de repos visible sur toutes les figures, présente l'aspect général d'une tuyère résultant de la continuité de l'entrée en forme de col de tuyère 4 et des volets 5 définissant un passage divergeant vers l'aval ou sortie 3 du corps 1. Ainsi, aucune arête vive n'existe dans le sillage aval de l'écoulement de l'air. En d'autres termes, le raccordement progressif des volets 5 avec l'entrée en forme de col de tuyère 4 supprime avantageusement l'apparition de vortex qui, comme on le sait, constituent une source de bruit.

Mais, pour une meilleure compréhension de l'invention, on expliquera brièvement dans ce qui suit, le fonctionnement de l'appareil décrit ci-dessus, en se reportant par exemple à la figure 1.

Les volets 5 pourront pivoter autour de l'articulation 8 en fonction des pressions s'exerçant sur les faces internes 5a et les faces externes 5b desdits volets.

En bref, les volets 5 se déplaceront sous l'effet de la différence entre :
- la pression existant en amont de l'écoulement et transmise par les ouvertures 6 débouchant dans les chambres 12 dont l'une des parois est constituée par la face externe Sa des volets 5, et
- la pression sur l'autre face ou face interne 5b des volets 5 après passage de l'air au travers de l'entrée en forme de col de tuyère 4, ce qui minimise les turbulences aléatoires engendrant des nuisances acoustiques.

A cet égard, on a matérialisé par des flèches G sur la figure 1 l'écoulement des filets d'air dans le passage P du corps 1, au niveau de la paroi interne définissant ce passage P et constituée par la continuité du col de tuyère 4 et des volets 5.

On a donc réalisé suivant l'invention un appareil de régulation automatique de débit d'air, qui est d'une conception mécanique particulièrement simple, qui ne comporte aucun élément géométriquement déformable autre que le système de rappel des volets, qui définit un passage pour l'air exempt de tout obstacle franc, et qui demeure d'un fonctionnement remarquablement fiable et silencieux même après un long usage.

Bien entendu, l'invention n'est nullement limitée aux modes de réalisation décrits et illustrés qui n'ont été donnés qu'à titre d'exemple.

C'est ainsi que l'articulation et le nombre des volets, les moyens de rappel de ces volets, le nombre d'ouvertures dans l'entrée en forme de col de tuyère et, d'une manière générale, les matériaux entrant en jeu dans la construction de l'appareil, peuvent être quelconques, sans sortir du cadre de l'invention. Par ailleurs, on pourrait parfaitement prévoir dans l'appareil une cale ou analogue profilée calibrant le débit sans que cette cale constitue pour autant un obstacle franc au passage de l'air.

C'est dire que cette invention comprend tous les équivalents techniques des moyens décrits ainsi que leurs combinaisons si celles-ci sont effectuées suivant son esprit.

## Revendications

1. Dispositif de régulation automatique du débit d'air dans une installation de ventilation ou analogue et du type comprenant un corps (1) insérable dans une partie de l'installation telle que par exemple conduit, bouche, caisson ou analogue et dont l'entrée (2) est munie d'un élément (4) en forme de col de tuyère auquel font suite deux volets (5) articulés sur ledit corps et susceptibles de se déplacer sous l'effet de la différence des pressions s'exerçant sur les faces externes (5a) et internes (5b) des volets (5) après passage de l'air au travers dudit élément en forme de col de tuyère (4), caractérisé en ce qu'au moins une ouverture (6) de prise de pression en amont du corps (1) est ménagée dans l'élément en forme de col de tuyère (4) pour déboucher dans au moins une chambre (12) définie par ledit élément, les faces externes (5a) des volets (5) et l'enveloppe du corps (1), et en ce que chaque volet (5) est articulé par une extrémité sur le corps (1) du côté de la sortie (3) dudit corps, tandis que l'autre extrémité ou bord libre (9) de chaque volet (5) comporte un retour (10) permettant à chaque volet de venir en butée sur l'enveloppe du corps (1), de manière que lesdits bords libres (9) se raccordent à l'élément en forme de col de tuyère (4), et que les volets (5) définissent un passage divergeant vers l'aval en sortie (3) du corps (1).

2. Dispositif selon la revendication 1, caractérisé en ce que les volets (5) sont sollicités en permanence vers une position d'ouverture maximum du passage d'air (P) dans le corps (1), par un ressort (11) monté entre la face externe (5a) de chaque volet et l'enveloppe du corps (1), ou bien par une lame-ressort (15) dont les extrémités libres (16) sont respectivement fixées sur lesdits volets.

3. Dispositif selon la revendication 1 ou 2, caractérisé en ce que les deux volets précités (5) sont fonctionnellement reliés par des moyens tels que par exemple des biellettes coopérantes ou analogues (13).

4. Dispositif selon l'une des revendications 1 à 3, caractérisé en ce qu'en position de repos et active, le ou les volets précités (5) forment dans le corps (1) un passage divergeant vers l'aval et se raccordant par les bords libres du ou des volets (5) à l'élément en forme de col de tuyère (4).

5. Dispositif selon l'une des revendications précédentes, caractérisé en ce que le corps précité (1) comporte une paroi externe formant enveloppe qui définit avec l'élément en forme de col de tuyère (4) et la face externe (5a) des volets (5) plusieurs chambres (12) interconnectées ou non et communiquant avec l'air amont par l'ouverture précitée (6).

6. Dispositif selon la revendication 5, caractérisé en ce que la paroi externe formant enveloppe du corps (1) est soit intégrale (7) audit corps, soit définie par la paroi d'un conduit, d'une bouche ou analogue (C) dans lequel est inséré le corps (1).
